# EUROPÄISCHE PATENTSCHRIFT

(11) **EP 0 522 127 B1**
(45) Veröffentlichungstag und Bekanntmachung des Hinweises auf die Patenterteilung: **12.04.1995**
(21) Anmeldenummer: 92903338.9
(22) Anmeldetag: 23.01.1992
(51) Int. Cl.: F16L 58/16, B65H 81/08

(54) **VORRICHTUNG ZUR BEHANDLUNG VON ROHROBERFLÄCHEN**
DEVICE FOR PROCESSING THE SURFACES OF PIPES
DISPOSITIF DE TRAITEMENT DE LA SURFACE DE TUYAUX

(30) Priorität: 30.01.1991 DE 4102663
(43) Veröffentlichungstag der Anmeldung: 13.01.1993
(73) Patentinhaber: Denso-Chemie Wedekind KG, D-51371 Leverkusen (DE)
(72) Erfinder: Baur, Fritz, D-5419 Urbach (DE)
(74) Vertreter: Maxton, Alfred, Dipl.-Ing.
(86) Internationale Anmeldenummer: EP9200132
(87) Internationale Veröffentlichungsnummer: WO9214090

(56) Entgegenhaltungen:
- WO-A-87/01682
- FR-A- 2 243 134
- GB-A- 453 112
- US-A- 2 112 865
- US-A- 2 198 178

## Beschreibung

Die Erfindung betrifft eine Vorrichtung zur Behandlung von Oberflächen an Rohren mit einem auf die Rohroberfläche aufsetzbaren, mit Laufrollen versehenen und die Rohroberfläche klauenartig umgreifenden Geräteträger, wobei die Drehachsen der Laufrollen unter einem Winkel zur Rohrachse einstellbar sind.

Zum Schutz gegen Korrosion werden Rohrleitungen, insbesondere Rohrleitungen aus metallischen Werkstoffen, mit einer Umkleidung versehen. Soweit diese Umkleidung nicht werksseitig aufgebracht werden kann, was insbesondere bei Großrohren der Fall ist, oder aber zur Sanierung von beschädigten Schutzumhüllungen, werden die Oberflächen mit Korrosionsschutzbinden, vorzugsweise kaltverarbeitbare Kunststoffbänder, wendelförmig und mit Überlappung umwickelt. Hierzu werden beispielsweise sogenannte Mehrschichtenbänder verwendet, wie etwa Polyethylen-Folien mit einem beidseitigen Belag aus Butyl-Kautschuk-Mischungen, so daß bei einer überlappenden Bewicklung die Bänder im Überlappungsbereich dicht zusammenwachsen und auf diese Weise die korrosionsgefährderen Rohroberflächen gegen korrosive Medien wie Sauerstoff, Wasser und/oder Bodenelektrolyth abdichten. Zur Gewährleistung eines dauerhaften Korrosionsschutzes ist es jedoch erforderlich, daß die Bänder mit konstanter Kraft von der Vorratsrolle abgezogen, d.h. mit konstantem Zug auf das Rohr aufgewickelt werden, wobei ferner für eine möglichst gleichmäßige Uberlappung auf dem Rohrumfang Sorge zu tragen ist.

Bei kleineren Rohrdurchmessern mit kurzen Rohrlängen haben sich Handgeräte auch im robusten Einsatz innerhalb eines Rohrgrabens bewährt, wie sie beispielsweise aus der DE-PS 23 60 700 bekannt sind. Bei Rohrdurchmessern, die so groß sind, daß eine Person diese zur Handhabung eines derartigen Gerätes nicht mehr umgreifen kann, so daß die Bedienung von mehreren Personen erforderlich ist, besteht die Gefahr, daß jeweils beim Umsetzen in der Handhabung durch geringfügige Richtungsänderungen in der Bewicklung Falten oder Überdehnungen im Kantenbereich entstehen, so daß hier durchlässige Stellen in der Korrosionsschutzumhüllung entstehen können. Das vorbekannte Gerät kann darüber hinaus nur an horizontal, allenfalls geringfügig geneigt verlaufenden Rohren eingesetzt werden. An senkrecht oder mit starker Steigung verlaufenden Rohren ist das vorbekannte Gerät nicht mehr handhabbar.

Für Großrohre, wie sie beispielsweise im Pipeline-Bau verwendet werden, sind Vorrichtungen der unterschiedlichsten Art bekannt, die in ihrem Grundaufbau aus einem ringförmigen Tragrahmen bestehen, der das zu bewickelnde Rohr umschließt und der sich mit Hilfe von Stützrollen, die sich auf der Rohroberfläche abstützen, auf dem zu bewickelnden Rohr drehbar gehalten ist. An diesen Tragrahmen sind in ähnlicher Weise wie bei dem vorstehend beschriebenen Handgerät ein oder mehrere Abwickelvorrichtungen für die Korrosionsschutzbänder angeordnet, mit denen das Rohr in der vorbeschriebenen Weise umwickelt werden soll. Derartige Geräte benötigen sehr viel Freiraum und sind so schwer, daß sie nur mit Hilfe von Hebezeugen handhabbar sind. Sie werden daher nur beim Neubau von Pipelines eingesetzt, wenn der zu verlegende Rohrstrang fortlaufend mit einer Korrosionsschutzumhüllung bewickelt werden soll. Für die Verwendung auf wechselnden Durchmessern, insbesondere für den Einsatz im Rahmen von Reparaturen oder zur Umwicklung von nur kurzen Rohrlängen sind diese vorbekannten schweren Geräte nicht geeignet.

Der Erfindung liegt die Aufgabe zugrunde, eine Vorrichtung der eingangs bezeichneten Art zu schaffen, mit der praktisch unabhängig vom Rohrdurchmesser und auch unabhängig von der Ausrichtung des zu behandelnden Rohres die Rohroberfläche bearbeitet werden kann. Je nach Einsatzfall soll die Behandlung der Oberfläche das mechanische Reinigen und/oder das Aufbringen von flüssigen oder pastösen Beschichtungen (Primern) und/oder das Bewickeln mit Korrosionsschutzbändern umfassen.

Die Aufgabe wird gemäß der Erfindung dadurch gelöst, daß am Geräteträger jeweils im Bereich eines Klauenendes wenigstens eine Umlenkrolle vorgesehen ist und daß ein endloses Antriebsband vorgesehen ist, das die jeweilige Umlenkrolle umschlingt und auf der dem Geräteträger abgekehrten Seite um das Rohr herumlegbar ist, daß die eine Umlenkrolle als Antriebsrolle ausgebildet ist und mit einem Antriebsmotor in Verbindung steht und daß die andere Umlenkrolle als Bremsrolle ausgebildet ist und mit einer Bremse in Verbindung steht und daß die Antriebsrolle und die Bremsrolle, bezogen auf eine Durchmesserebene des Rohres, gegeneinander versetzbar angeordnet sind. Der Vorteil der erfindungsgemäßen Vorrichtung besteht darin, daß der Geräteträger selbst mit seinen Laufrollen das zu bewickelnde Rohr nur über einen Teil seines Umfangs zu umgreifen braucht, und zwar um eine Umfangslänge die kleiner ist als der halbe Rohrumfang, so daß sich geringe Gerätegewichte ergeben. Der Geräteträger wird auf der Rohroberfläche mit Hilfe des den restlichen Teil des Rohrumfanges umschlingenden Antriebsbandes gehalten, wobei der Antriebstrum des Antriebsbandes fest an die Rohroberfläche angepreßt ist, während der Lostrum frei im Raum verlaufen kann. Die Anpreßkraft, mit der der Antriebstrum gegen die Rohroberfläche anliegt, wird durch den Zug der Antriebsrolle einerseits und durch die dagegen wirkende Bremskraft der Bremsrolle andererseits gebildet. Sie ist über die Bremse an der Bremsrolle einstellbar. Da nun die Antriebsrolle und die Bremsrolle, bezogen auf eine Durchmesserebene des Rohres, gegeneinander versetzbar angeordnet sind, verläuft der gegen die Rohroberfläche gepreßte Antriebstrum unter einem Winkel gegenüber einer Durchmesserebene. Dieser Winkel bestimmt die Steigung der Umlaufbewegung des Geräteträgers um das Rohr, so daß bei Drehung der Antriebsrolle der Geräteträger um das Rohr auf einer Schraubenlinie in einer Richtung fortschreitend herumgezogen wird und somit das jeweils auf dem Geräteträger angeordnete Bearbeitungsgerät auf einer schraubenlinienförmigen Bahn auf die zu behandelnde Rohroberfläche kontinuierlich, d.h. ohne jegliche Unterbrechung in der Bewegung einwirkt, so daß beispielsweise bei einer Bewicklung mit einem Korrosionsschutzband die Bewicklung durchlaufend mit konstanter Bandzugspannung erfolgt. Ein weiterer Vorteil der erfindungsgemäßen Vorrichtung besteht darin, daß infolge des großen Umschlingungswinkels durch den Antriebstrum des Antriebsbandes das Gerät nicht nur auf horizontal verlaufenden Rohren sondern auch an Rohren mit jeder beliebigen Neigung bis hin zu vertikal verlaufenden Rohren eingesetzt werden kann. Da der Geräteträger die Rohroberfläche nur über einen geringen Teil des Umfangs umfaßt, d.h. auf der Rohroberfläche "reitet", kann die Vorrichtung in großen Bereichen unterschiedlicher Durchmesser eingesetzt werden und zwar praktisch ohne Umrüstung. Die Grenze wird zu den kleinen Durchmessern durch die von den Laufrollen definierte Klauenweite bestimmt und für die großen Durchmesser durch die gestreckte Länge des endlosen Antriebsbandes. Die jeweilige Anpassung an unterschiedliche Durchmesser erfolgt jeweils automatisch durch den am Rohr anliegenden Antriebstrum des Antriebsbandes.

In bevorzugter Ausgestaltung sind das Antriebsband als Zahnriemen und die Umlenkrollen als Zahnrollen ausgebildet. Die Breite des Zahnriemens richtet sich hierbei im wesentlichen nach der durch das Gewicht des Geräteträgers bestimmten Zugbelastung für das Antriebsband. Anstelle des bevorzugt verwendeten Zahnriemens für das Antriebsband ist es aber auch möglich, eine mehrreihige Rollen- oder Laschenkette zu verwenden, die auf ihrer der Rohroberfläche zugekehrten Seite mit vorzugsweise aus einem elastischen Material belegten Stützschuhen versehen sind. Insbesondere bei der Verwendung eines Zahnriemens ist es zur Vermeidung von unterschiedlichen Zugbelastungen im Querbereich vorteilhaft, wenn die beiden Umlenkrollen jeweils zwischen der Laufspur zweier Laufrollen des zugehörigen Klauenendes angeordnet sind. Je nach Größe des Geräteträgers, insbesondere je nach Größe der auf dem Geräteträger anzuordnenden Werkzeuge, werden die Laufrollen jeweils mit größtmöglichem axialen Abstand zu den Umlenkrollen angeordnet, so daß insbesondere bei der Verwendung an vertikal verlaufenden Rohren das über den Antriebstrum des Antriebsbandes aufzunehmende Kippmoment reduziert ist.

In weiterer Ausgestaltung der Erfindung ist vorgesehen, daß an den Umlenkrollen jeweils auf der Einlauf- und der Auslaufseite des Lostrums des Antriebsbandes eine Klemmrolle angeordnet ist. Durch eine derartige Klemmrolle ist es möglich, einen großen Umschlingungswinkel für das Antriebsband auf der Umlenkrolle zu erzielen. Anstelle einer Klemmrolle ist es aber auch möglich, die Umschlingung des Antriebsbandes mit Hilfe eines entsprechend ausgebildeten Stütz- oder Führungsschuhes zu bewirken um zu gewährleisten, daß das Antriebsband nicht aus der Verzahnung der Umlenkrollen herausspringen kann, da der Lostrum praktisch zugspannungsfrei im Raum verläuft.

In weiterer Ausgestaltung der Erfindung ist vorgesehen, daß zur Einstellung der Steigung der Umlaufbewegung des Geräteträgers wenigstens eine der Umlenkrollen, vorzugsweise die Antriebsrolle, in Richtung ihrer Drehachse verschieb- und feststellbar ausgebildet ist. Hierdurch kann jede gewünschte Steigung und damit für den Einsatzfall der Bewicklung mit einem Korrosionsschutzband jede gewünschte Überlappung vorgegeben werden.

In weiterer vorteilhafter Ausgestaltung der Erfindung ist vorgesehen, daß für die Querverstellung der Antriebsrolle ein Antriebsmittel vorgesehen ist, das mit dem Antriebsmotor, vorzugsweise fernsteuerbar, in ein- und auskuppelbarer Verbindung steht. Diese Anordnung hat den Vorteil, daß die Steigung während des Betriebes verstellt werden kann. So ist es dann möglich, beispielsweise bei einer Bewicklung zu Beginn des Wickelvorganges mehrere Lagen ohne Steigung aufzubringen und dann anschließend durch entsprechende Verstellung des Querversatzes der Umlenkrollen zueinander die gewünschte Steigung und damit die gewünschte Überlappung einzustellen und anschließend zum Ende des Wickelvorganges wieder den Auslauf des Wickels durch mehrere Umwicklungen ohne Steigungen abzuschließen. Anstelle des kuppelbaren Antriebsabgriff vom Antriebsmotor der Vorrichtung selbst ist es natürlich auch möglich, einen gesonderten Antrieb für die Querverstellung der Antriebsrolle vorzusehen. Die Koppelung mit dem Antriebsmotor bietet jedoch den Vorteil, daß der Übergang aus der Umwicklung ohne Steigung in eine Bewicklung mit Steigung kontinuierlich während der Umlaufbewegung erfolgen.

In weiterer vorteilhafter Ausgestaltung der Erfindung ist vorgesehen, daß eine der Umlenkrollen, vorzugsweise die Bremsrolle, mit samt ihrer Achse lösbar mit dem Geräteträger verbunden ist. Mit Hilfe dieser Ausgestaltung ist es möglich, die durch das Antriebsband bewirkte Umschlingung des Rohres zu lösen, so daß die Vorrichtung in einfacher Weise auf ein Rohr aufgesetzt und nach Beendigung der Arbeiten wieder abgenommen werden kann. Beim Aufsetzen wird der Geräteträger nach dem Einlegen des Antriebsbandes in die Bremsrolle zunächst von Hand am Rohr gehalten und mit Hilfe des Antriebsmotors über die Antriebsrolle der Antriebstrum des Antriebsbandes festgezogen, so daß der Geräteträger fest auf dem Rohr aufsitzt. Zum Abnehmen des Geräteträgers nach Abschluß der Arbeiten wird je nach Ausbildung der Antrieb in umgekehrter Drehrichtung betrieben, so daß sich der Antriebstrum löst oder aber an der Bremsrolle die Bremse gelöst wird, so daß dann die Bremsrolle herausgenommen und die Umschlingung durch das Antriebsband geöffnet wird. Bei entsprechend ausgestalteten Antriebsbändern ist es alternativ jedoch möglich, diese mit einem lösbaren Bandverschluß zu versehen, so daß hier lediglich der Bandverschluß zu öffnen ist.

In weiterer Ausgestaltung der Erfindung ist vorgesehen, daß der Geräteträger mit einem Energiespeicher für den Antriebsmotor versehen ist. Dies kann bei Arbeiten über Tage ein elektrischer Akkumulator sein, da für die hier erforderlichen relativ geringen Antriebsenergien und für die erforderlichen Einsatzzeiten leistungsfähige elektrische Akkumulatoren zur Verfügung stehen. Für den Einsatz unter Wasser, beispielsweise zur Sanierung von Hafeneinrichtungen im Bereich des Tidenhubes kann der Energiespeicher durch einen Druckluftbehälter gebildet werden, aus dem der als Druckluftmotor ausgebildete Antriebsmotor gespeist wird. In gleicher Weise ist auch ein Verbrennungsmotor als Antriebsmotor mit einem entsprechenden Tank möglich, wobei hier der als Energiespeicher dienende Tank so ausgebildet sein muß, daß ein Kraftstoffzulauf auch in "Überkopflage" gewährleistet ist.

Während es grundsätzlich möglich ist, die Vorrichtung von Hand in Betrieb zu setzen, wobei hier der Start- und Stophebel in Form eines den Flugkreis des Gerätes überragenden Tastarms ausgebildet ist, ist in zweckmäßiger Ausgestaltung der Erfindung für den Antriebsmotor eine Fernsteuerung vorgesehen.

In Ausgestaltung der Erfindung ist vorgesehen, daß am Geräteträger eine vorzugsweise antreibbare Reinigungsvorrichtung zur Reinigung der zu behandelnden Rohroberfläche angeordnet ist. Eine derartige Reinigungsvorrichtung kann beispielsweise durch einen Schaber und/oder eine rotierende Bürste gebildet werden, wobei die Antriebsenergie für eine rotierende Bürste vom Antriebsmotor abgegriffen werden kann.

In weiterer Ausgestaltung der Erfindung ist vorgesehen, daß am Geräteträger eine mit einem Vorratsbehälter versehene Einrichtung zum Auftragen eines flüssigen Vorbehandlungsmittel angeordnet ist. Der Begriff "flüssig" umfaßt hierbei sowohl pastöse Vorbehandlungsmittel, die aufgestrichen werden, als auch flüssige Vorbehandlungsmittel, die aufgespritzt werden. Die Anordnung kann hierbei so getroffen werden, daß die Vorrichtung in Bewegungsrichtung gesehen, vorlaufend eine Reinigungseinrichtung trägt und nachlaufend die Einrichtung zum Auftragen des Vorbehandlungsmittels, so daß die Abreinigung und der Auftrag des Vorbehandlungsmittels in einem Arbeitsgang erfolgen kann.

In weiterer Ausgestaltung der Erfindung ist vorgesehen, daß am Geräteträger wenigstens eine Abwickelvorrichtung zur Aufnahme eines Wickels einer um das zu behandelnde Rohr zu umwickelnden Schutzbandes angeordnet ist, die mit einer einstellbaren Bremseinrichtung zur Regulierung des Wickelzuges versehen ist. Die Bremseinrichtung ist hierbei vorzugsweise so ausgebildet, daß sie die Bremskraft in Abhängigkeit von der Abnahme des Wickeldurchmessers vermindert, so daß ein konstanter Wickelzug erreicht wird. Zweckmäßig ist es hierbei, wenn bei der Verwendung nur eines Bandwickels dieser in etwa in der Durchmesserebene am Geräteträger angeordnet ist, in der auf der dem Rohr abgekehrten Seite auch das Antriebsband verläuft. Hierdurch wird ein Kippen des Geräteträgers infolge des Bandzuges vermieden. Bei der Verwendung von zwei Bandwickeln werden diese zweckmäßigerweise so angeordnet, daß sie symmetrisch zu beiden Seiten der Durchmesserebene am Geräteträger angeordnet sind, in der auch das Antriebsband verläuft.

Die Erfindung wird anhand schematischer Zeichnungen eines Ausführungsbeispieles dargestellt. Es zeigen:
- Fig. 1: eine Stirnansicht auf ein Rohr mit einem aufgesetzten Geräteträger zum Bewickeln des Rohres mit einem Korrosionsschutzband,
- Fig. 2: eine Aufsicht auf das Rohr auf die dem Geräteträger abgekehrte Seite.

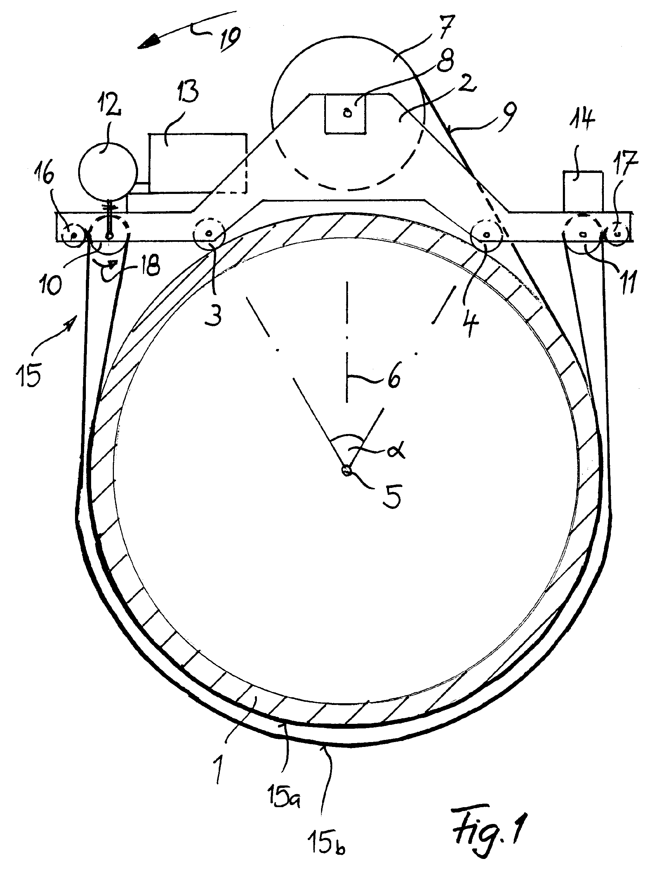

In Fig. 1 ist eine Vorrichtung dargestellt, mit deren Hilfe die Oberfläche eines Rohres 1 mit einem Korrosionsschutzband überlappend umwickelt werden soll. Die Vorrichtung weist einen Geräteträger 2 auf, der mit je zwei Laufrollen 3 und zwei Laufrollen 4 versehen ist, so daß der Geräteträger 2 auf der Umfangsfläche des Rohres abrollen kann. Der Abstand zwischen dem Laufrollenpaar 3 und dem Laufrollenpaar 4 ist hierbei so bemessen, daß die Aufsetzpunkte einen Teil der Umfangsfläche des Rohres klauenartig umfassen, wobei der Umfassungswinkel α, bezogen auf die Rohrachse 5, kleiner als 180° ist. Der Abstand muß hierbei so bemessen werden, daß der Geräteträger 2 nicht um seine Hochachse 6 auf dem Rohr verdreht werden kann.

Am Geräteträger 2 ist eine Abwickelvorrichtung vorgesehen, die einen drehbaren Spulendorn aufweist, der einen Bandwickel 7 mit einem Korrosionsschutzband trägt und der mit einer einstellbaren Bremseinrichtung versehen ist, mit deren Hilfe die auf den Bandwickel beim Abwickeln wirkende Zugkraft einstellbar ist. Die Bremseinrichtung ist hierbei zweckmäßig so ausgebildet, daß sie in Abhängigkeit von der Abnahme des Durchmessers des Bandwickels 7 die Bremskraft proportional reduziert. Das vom Bandwickel 7 ablaufende Band 9 läuft auf die Rohroberfläche auf.

Am Geräteträger 2 sind im Bereich des durch die Laufrollenpaare 3 und 4 gebildeten Klauenendes je eine Umlenkrolle 10 und 11 angeordnet, wobei die Umlenkrolle 10 als Antriebsrolle und die Umlenkrolle 11 als Bremsrolle ausgebildet sind. Die Antriebsrolle 10 steht mit einem Antriebsmotor 12 in Verbindung, der am Geräteträger 2 befestigt ist und der mit einem Energiespeicher 13 in Verbindung steht. Bei einem elektrischen Antriebsmotor wird der Speicher 13 durch einen elektrischen Akkumulator gebildet.

Die Bremsrolle 11 steht mit einer einstellbaren Bremse 14, beispielsweise einer Scheibenbremse in Verbindung. Über die beiden Umlenkrollen 10 und 11 ist ein Antriebsband 15 geführt, das das Rohr 1 auf der dem Geräteträger 2 abgekehrten Seite mit einem Antriebstrum 15a fest anliegend und mit seinem Lostrum 15b lose laufend umschlingt. Jeweils auf der Einlaufseite des Lostrums 15b an der Bremsrolle 11 und an der Auslaufseite des Lostrums 15b an der Antriebsrolle 10 sind den Umlenkrollen 10, 11 Klemmrollen 16, 17 zugeordnet, durch die die Umschlingung der Umlenkrollen 10, 11 mit dem jeweiligen Teil des Antriebsbandes fixiert ist.

Wird nun über den Antriebsmotor die Antriebsrolle 10 in der durch den Pfeil 18 gekennzeichneten Drehrichtung angetrieben, dann wird der Geräteträger 2 in Richtung des Pfeiles 19 um das Rohr 1 herumgeführt. Das auf der Antriebsrolle 10 abgekehrten Seite an der Oberfläche des Rohres 1 festgelegte Korrosionsschutzband 9 wird hierbei vom Bandwickel 7 abgespult, wobei die auf das Band infolge der Umlaufbewegung des Geräteträgers 2 wirkende Zugspannung über die Bandablaufbremse 8 konstant vorgegeben ist. Die Anpreßkraft, mit der der Antriebstrum 15a des Antriebsbandes 15 gegen die Rohroberfläche gepreßt wird, ergibt sich aus der auf die Umlenkrolle 11 wirkenden Bremskraft. Diese Bremskraft wird so eingestellt, daß der Geräteträger 2 in keiner Position während der Umlaufbewegung von der Rohroberfläche abheben kann.

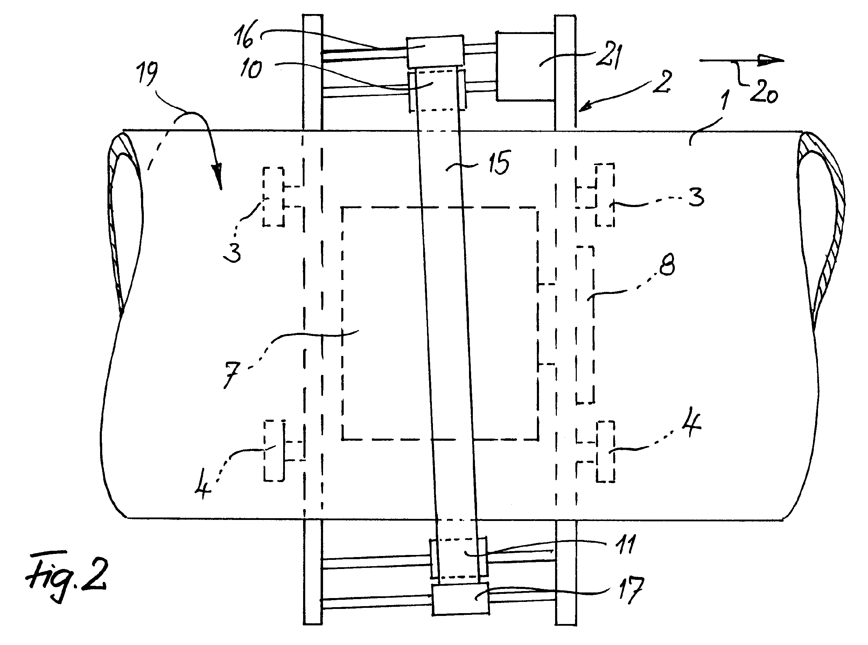

Wenn nun, wie Fig. 2 zeigt, die Antriebsrolle 10 gegenüber der Bremsrolle 11, bezogen auf eine Durchmesserebene des Rohres, versetzt zueinander angeordnet sind, dann verläuft der Antriebstrum 15a des Antriebsbandes auf dem umschlungenen Teil der Rohroberfläche auf einer Schraubenlinie. Wird nun in der in Fig. 1 angegebenen Drehrichtung die Antriebsrolle 10 angetrieben, so daß der Geräteträger 2 in Richtung des Pfeiles 19 auf der Rohroberfläche umläuft, so ist aus Fig. 2 ohne weiteres zu erkennen, daß damit der Geräteträger 2 zwangsläufig sich auf einer schraubenlinienförmigen Bahn in Richtung des Pfeiles 20 in Längsrichtung des Rohres bewegt. Da bei der Umwicklung von Rohren mit Korrosionsschutzbändern aufgrund der vorgegebenen Überlappung der Steigungswinkel der Schraubenlinie vorgegeben ist, wobei der Steigungswinkel nur sehr gering ist, können die Drehachsen der Umlenkrollen 10, 11 aber auch die Drehachsen der Laufrollenpaare 3, 4 praktisch parallel zur Achse 5 des zu umwickelnden Rohres ausgerichtet sein. Bei kleineren Rohren bis zu etwa 30 cm Durchmesser ist es jedoch zweckmäßig, wenn hier die Drehachsen sowohl der Laufrollen als auch der Umlenkrollen unter einem Winkel zur Rohrachse 5 ausgerichtet sind, der dem Steigungswinkel der schraubenlinienförmigen Umlaufbewegung des Geräteträgers entspricht.

Um die Vorrichtung auf das zu umwickelnde Rohr aufsetzen zu können, ist zunächst die Umlenkrolle 11 vom Geräteträger 2 gelöst, so daß das zugehörige Ende des Antriebsbandes 15 freiliegt. Dieses wird um das Rohr herum und in den Geräteträger 2 eingeführt. Anschließend wird die Umlenkrolle 11 durch das eine Schlaufe bildende Ende des Antriebsbandes 15 hindurchgesteckt und am Geräteträger 2 festgelegt. Nun wird mit Hilfe des Antriebsmotors der zunächst lose an der Rohroberfläche anliegenden Antriebstrum 15a des Antriebsbandes 15 gegen die Wirkung der Bremse 14 an der Bremsrolle 11 angezogen, so daß der Geräteträger 2 fest auf dem zu bewickelnden Rohr aufsitzt. Danach wird vom Bandwickel 7 das freie Ende des aufzubringenden Korrosionsschutzbandes abgezogen, an der Rohroberfläche festgelegt, so daß nunmehr der Wickelvorgang durchgeführt werden kann.

Wird nun eine der Umlenkrollen, beispielsweise die Antriebsrolle 10 noch mit einer Verschiebeeinrichtung 21 versehen, mit deren Hilfe sie auf der Antriebswelle verschiebbar ist, und verbindet man diese Verschiebeeinrichtung 21 mit Hilfe einer fernsteuerbaren Kupplung mit dem Antriebsmotor, dann kann der Versatz der Antriebsrolle 10 gegenüber der Bremsrolle 11 während des Betriebes verändert werden, so daß zu Beginn des Wickelvorganges zunächst mehrere Bandlagen übereinander aufgewickelt werden und daß nach Einrücken der Kupplung die Antriebsrolle 10 mit Hilfe der Verschiebeeinrichtung 21 während des Umlaufs soweit verschoben werden kann, bis der vorgeschriebene Versatz gegenüber der Bremsrolle 11 erreicht ist und so eine Umwicklung mit der vorgegebenen Überlappung erreicht wird. Dann wird die Kupplung ausgerückt, so daß der Wickelvorgang fortgesetzt werden kann. Gegen Ende des Wickelvorganges muß dann die Verschiebeeinrichtung 21 nunmehr mit umgekehrter Betätigungsrichtung wieder eingekuppelt werden, so daß der Versatz der Antriebsrolle 10 gegenüber der Bremsrolle 11 wieder zurückgenommen wird, so daß zum Schluß des Wickelvorganges wiederum mehrere Lagen übereinander ohne Uberlappung den Abschluß der Umwicklung bilden.

Wie eingangs beschrieben, können nun statt des vorstehend beschriebenen Bandwickels Reinigungsvorrichtungen in Form von Spachteln, rotierenden Bürsten oder dergl. am Geräteträger angebracht werden, um die für die abschließenede Umwicklung mit Korrosionsschutzband erforderlichen Vorarbeiten durchführen zu können. In gleicher Weise können auch, wie vorstehend ebenfalls beschrieben, Einrichtungen zum Aufbringen von flüssigen oder pastösen Vorbehandlungsmitteln am Geräteträger angeordnet sein, ggf. kombiniert mit der Reinigungsvorrichtung und/oder kombiniert mit einer Wickelvorrichtung.

Die Drehachsen der Laufrollen 3, 4 sind in ihrer Winkelstellung in bezug auf die Rohrachse zweckmäßig einstellbar ausgebildet. Die erforderliche Winkelstellung ist abhängig vom Durchmesser des zu umwickelnden Rohres, der Breite des aufzubringenden Bandes und der geforderten Überlappung. Bei großen Rohrdurchmessern kann die Drehachse der Laufrollen, wie in Fig. 2 schematisch gezeigt, in etwa parallel zur Rohrachse ausgerichtet sein, da die vom Antriebsband ausgeübten Kräfte ausreichen, die wendelförmige Bewegung zu erzwingen. Bei kleinen Rohrdurchmessern müssen die Drehachsen unter einem Winkel eingestellt werden, wie dies für die Umlenkrollen 10, 11 in Fig. 2 angedeutet ist. Auch für die Winkelstellung der Umlenkrollen gelten die gleichen Bedingungen, wie sie vorstehend für die Laufrollen angegeben sind.

Anstelle von vier Laufrollen, wie in Fig. 2 gezeigt, können auch nur drei Laufrollen vorgesehen sein, wobei zweckmäßigerweise zwei Laufrollen auf der Seite des auf das Rohr auflaufenden Bandes 9 angeordnet sind und eine Laufrolle an der Antriebsseite den Geräteträger abstützt.

Je nach konstruktiver Gestaltung können die Laufrollen und die Umlenkrollen zumindest auf einer Seite des Geräteträgers gleichachsig, d.h. auf einer gemeinsamen Achse oder Welle angeordnet sein.

Anstelle der vorstehend beschriebenen Zahnriemen können auch Keilriemen verwendet werden. Hierbei können mehrere derartiger Keilriemen parallel nebeneinander angeordnet werden, wobei der erforderliche Umschlingungswinkel der Umlenkrollen, die mit entsprechenden Nuten versehen sind, durch die Anordnung der Klemmrollen sichergestellt ist. Dies ist insbesondere für große Rohrdurchmesser von Vorteil.

## Patentansprüche

1. Vorrichtung zur Behandlung von Oberflächen an Rohren mit einem auf die Rohroberfläche aufsetzbaren, mit Laufrollen versehenen und die Rohroberfläche klauenartig umgreifenden Geräteträger, wobei die Drehachsen der Laufrollen unter einem Winkel zur Rohrachse einstellbar sind, **dadurch gekennzeichnet,** daß am Geräteträger (2) jeweils im Bereich eines Klauenendes wenigstens eine Umlenkrolle (10, 11) vorgesehen ist und daß ein endloses Antriebsband (15) vorgesehen ist, das die jeweilige Umlenkrolle (10, 11) umschlingt und auf der dem Geräteträger (2) abgekehrten Seite um das Rohr (1) herumlegbar ist, daß die eine Umlenkrolle (10) als Antriebsrolle ausgebildet ist und mit einem Antriebsmotor (12) in Verbindung steht und daß die andere Umlenkrolle (11) als Bremsrolle ausgebildet ist und mit einer Bremse (14) in Verbindung steht und daß die Antriebsrolle (10) und die Bremsrolle (11), bezogen auf eine Durchmesserebene des Rohres (1), gegeneinander versetzbar angeordnet sind.

2. Vorrichtung nach Anspruch 1, dadurch gekennzeichnet, daß das Antriebsband (15) als Zahnriemen und die Umlenkrollen (10, 11) als Zahnrollen ausgebildet sind.

3. Vorrichtung nach Anspruch 1 oder 2, dadurch gekennzeichnet, daß an den Umlenkrollen (10, 11) jeweils auf der Einlauf- und der Auslaufseite des Lostrums (15b) des Antriebsbandes (15) eine Klemmrolle (16, 17) angeordnet ist.

4. Vorrichtung nach einem der Ansprüche 1 bis 3, dadurch gekennzeichnet, daß zur Einstellung der Steigung der Umlaufbewegung des Geräteträgers (2) auf der Rohroberfläche wenigstens eine der Umlenkrollen (10, 11), vorzugsweise die Antriebsrolle (10), in Richtung ihrer Drehachse verschieb- und feststellbar ausgebildet ist.

5. Vorrichtung nach Anspruch 4, dadurch gekennzeichnet, daß für die Querverstellung der Antriebsrolle (10) ein Antriebsmittel vorgesehen ist, das mit dem Antriebsmotor (12) vorzugsweise fernsteuerbar in ein- und auskuppelbarer Verbindung steht.

6. Vorrichtung nach einem der Ansprüche 1 bis 5, dadurch gekennzeichnet, daß eine der Umlenkrollen (10, 11), vorzugsweise die Bremsrolle (11), mit samt ihrer Achse lösbar mit dem Geräteträger (2) verbunden ist.

7. Vorrichtung nach einem der Ansprüche 1 bis 6, dadurch gekennzeichnet, daß das Antriebsband (15) mit einem lösbaren Bandverschluß versehen ist.

8. Vorrichtung nach einem der Ansprüche 1 bis 7, dadurch gekennzeichnet, daß der Geräteträger (2) mit einem Energiespeicher (13) für den Antriebsmotor (12) versehen ist.

9. Vorrichtung nach einem der Ansprüche 1 bis 8, dadurch gekennzeichnet, daß für den Antriebsmotor (12) eine Fernsteuerung vorgesehen ist.

10. Vorrichtung nach einem der Ansprüche 1 bis 9, dadurch gekennzeichnet, daß am Geräteträger (2) eine vorzugsweise antreibbare Reinigungsvorrichtung zur Reinigung der zu behandelnden Rohroberfläche angeordnet ist.

11. Vorrichtung nach einem der Ansprüche 1 bis 10, dadurch gekennzeichnet, daß am Geräteträger (2) eine mit einem Vorratsbehälter versehene Einrichtung zum Auftragen eines flüssigen Vorbehandlungsmittels angeordnet ist.

12. Vorrichtung nach einem der Ansprüche 1 bis 11, dadurch gekennzeichnet, daß am Geräteträger (2) wenigstens eine Abwickelvorrichtung zur Aufnahme eines Wickels (7) einer um das zu behandelnde Rohr (1) zu umwickelnden Schutzbandes (9) angeordnet ist, die mit einer einstellbaren Bremseinrichrung (8) zur Regulierung des Wickelzuges versehen ist.

13. Vorrichtung nach einem der Ansprüche 1 - 12, dadurch gekennzeichnet, daß die der als Bremsrolle ausgebildeten Umlenkrolle (11) zugeordnete Bremse (14) hinsichtlich ihrer Bremskraft einstellbar ist.

## Claims

1. Device for treating surfaces of pipes, with a device support which has operating rollers and which encloses a given pipe surface in a claw-like way, which can be placed on a pipe surface concerned, whereby axes of rotation of said operating rollers can be set at an angle to an axis of pipes concerned, **wherein,** in each case, in an area of a claw-grip end, at least one reversing roller (10, 11) is provided on a device support (2) and an endless drive belt (15) is provided which wraps around a relevant reversing roller (10, 11) and which can be placed around a given pipe (1) on a side facing away from a said device support (2), and one reversing roller (10) is developed as a drive roller and is connected to a drive motor (12), and a second reversing roller (11) is developed as a brake roller which is connected to a brake (14), and a said drive roller (10) and a said brake roller (11) are set opposite each other in relation to a diametric plane of a given pipe (1).

2. Device in accordance with claim 1, wherein a drive belt (15) is developed as a toothed belt and reversing rollers (10, 11) are developed as sprocket rollers.

3. Device in accordance with either claim 1 or claim 2, wherein, one grip roller (16, 17) is in each case disposed on reversing rollers (10, 11) on an entry side and a delivery side of an outer length (15b) of a drive belt.

4. Device in accordance with any one of claims 1 to 3, wherein at least one reversing roller (10, 11), preferably a drive roller (10), is developed such that it can shift and be fixed along a direction of its axis of rotation, for adjusting an increment of circulating movement of a device support (2) on a surface of a given pipe.

5. Device in accordance with claim 4, wherein an actuation means is provided for cross-adjustment of a drive roller (10), said actuation means being connected to a drive motor (12), preferably such that it can be remote-controlled and can be coupled and disconnected.

6. Device in accordance with any one of claims 1 to 5, wherein one of two reversing rollers (10, 11), preferably a drive roller (10), is connected to a device support (2), releasably, along all of its axis.

7. Device in accordance with any one of claims 1 to 6, wherein a drive belt (15) is provided with a releasable belt-locking means.

8. Device in accordance with any one of claims 1 to 7, wherein a device support (2) is provided with an energy storage means (13) for a drive motor (12).

9. Device in accordance with any one of claims 1 to 8, wherein a remote-control means is provided for a drive motor (12).

10. Device in accordance with any one of claims 1 to 9, wherein one, preferably drivable, cleaning device for cleaning a pipe surface to be handled is disposed an a device support (2).

11. Device in accordance with any one of claims 1 to 10, wherein a device with a supply vessel for applying a liquid pre-treating means is disposed on a device support (2).

12. Device in accordance with any one of claims 1 to 11, wherein at least one winding-off device for uptake of a roller (7) of a protection band to be rolled around a pipe (1) to be treated is disposed on a device support (2), said winding-off device being provided with an adjustable brake device (8) for adjusting drawing of a said roller (7).

13. Device in accordance with any one of claims 1 to 12, wherein a brake (14), associated with a reversing roller (11), developed as a brake-roller, can be adjusted concerning its braking force.

## Revendications

1. Dispositif de traitement de la surface de tuyaux comportant un porte-appareil qui peut se placer sur la surface du tuyau, est muni de galets de roulement et enserre la surface du tuyau à la façon de griffes, dispositif dans lequel les axes de rotation des galets de roulement peuvent se régler sous un certain angle par rapport à l'axe du tuyau, caractérisé par le fait que sur le porte-appareil (2) est prévu, dans la zone de chacune des extrémités des griffes, au moins un galet de changement de direction (10, 11) et qu'il est prévu un ruban d'entraînement sans fin (15) qui encercle chacun des galets de changement de direction (10, 11) et peut se poser autour du tuyau (1) du côté opposé au porte-appareil (2), que le premier galet de changement de direction (10) est conçu sous forme de galet d'entraînement et est relié à un moteur d'entraînement (12) et que l'autre galet de changement de direction (11) est conçu sous forme de galet de freinage et est relié à un frein (14) et que le galet d'entraînement (10) et le galet de freinage (11), rapporté à un plan diamétral du tuyau (1), sont disposés avec possibilité de se décaler l'un par rapport à l'autre.

2. Dispositif selon la revendication 1, caractérisé par le fait que le ruban d'entraînement (15) est conçu sous forme de courroie crantée et que les galets de changement de direction (10, 11) sont conçus sous forme de galets dentés.

3. Dispositif selon l'une des revendications 1 ou 2, caractérisé par le fait qu'un galet de serrage (16, 17) est disposé contre les galets de changement de direction (10, 11) sur chacun des côtés d'entrée et de sortie du brin mou (15b) du ruban d'entraînement (15).

4. Dispositif selon l'une des revendications 1 à 3, caractérisé par le fait que pour régler le pas du mouvement périphérique du porte-appareil (2) sur la surface du tuyau, au moins l'un des galets de changement de direction (10, 11), de préférence le galet d'entraînement (10), est conçu avec possibilité de coulisser selon la direction de son axe de rotation et de se bloquer.

5. Dispositif selon la revendication 4, caractérisé par le fait que pour l'avance transversale du galet d'entraînement (10) est prévu un moyen d'entraînement qui peut être mis en liaison de couplage ou de découplage avec le moteur d'entraînement (12), de préférence par télécommande.

6. Dispositif selon l'une des revendications 1 à 5, caractérisé par le fait que l'un des galets de changement de direction (10, 11), de préférence le galet de freinage (11), y compris son axe, est relié au porte-appareil (2) de façon amovible.

7. Dispositif selon l'une des revendications 1 à 6, caractérisé par le fait que le ruban d'entraînement (15) est muni d'une fermeture de ruban ouvrante.

8. Dispositif selon l'une des revendications 1 à 7, caractérisé par le fait que le porte-appareil (2) est muni d'un accumulateur d'énergie (13) pour le moteur d'entraînement (12).

9. Dispositif selon l'une des revendications 1 à 8, caractérisé par le fait que pour le moteur d'entraînement (12) est prévue une télécommande.

10. Dispositif selon l'une des revendications 1 à 9, caractérisé par le fait que sur le porte-appareil (2) est disposé un dispositif de nettoyage, de préférence motorisé, pour le nettoyage de la surface du tuyau à traiter.

11. Dispositif selon l'une des revendications 1 à 10, caractérisé par le fait que sur le porte-appareil (2) est disposé un dispositif, muni d'un réservoir, pour appliquer un agent de prétraitement liquide.

12. Dispositif selon l'une des revendications 1 à 11, caractérisé par le fait que sur le porte-appareil (2) est disposé au moins un dispositif de déroulement pour recevoir une bobine d'une bande de protection (9) qui est à enrouler autour du tuyau à traiter (1) et qui est munie d'un dispositif de freinage réglable (8) pour régler le tirage de la bobine.

13. Dispositif selon l'une des revendications 1-12, caractérisé par le fait que le frein (14) correspondant au galet de changement de direction (11) conçu sous forme de galet de freinage est réglable en ce qui concerne sa force de freinage.
